# EUROPEAN PATENT APPLICATION

(11) **EP 4 778 800 A1**
(43) Date of publication of application: **22.07.2026**
(21) Application number: 24864532.7
(22) Date of filing: 05.09.2024
(51) Int. Cl.: B60W 30/18, B60W 10/20, B60W 10/04

(54) **ON-THE-SPOT U-TURN CONTROL METHOD AND CONTROL APPARATUS, VEHICLE AND STORAGE MEDIUM**

(30) Priority: 13.09.2023 CN 202311181719
(71) Applicant: BYD Company Limited, Shenzhen, Guangdong 518118 (CN)
(72) Inventor: LU, Guoxiang, Shenzhen, Guangdong 518118 (CN); XU, Pu, Shenzhen, Guangdong 518118 (CN); ZHUANG, Xuli, Shenzhen, Guangdong 518118 (CN); GUO, Kai, Shenzhen, Guangdong 518118 (CN); ZHANG, Wenqi, Shenzhen, Guangdong 518118 (CN)
(74) Representative: Mathys & Squire
(86) International application number: PCT/CN2024/117121
(87) International publication number: WO 2025/055812

(57) **Abstract**

Provided are an in-place U-turn control method and control apparatus, a vehicle, and a storage medium. The in-place U-turn control method includes: obtaining turning direction information of an in-place U-turn input by a user via a display apparatus; and controlling a vehicle to perform the in-place U-turn according to the turning direction information until a stop condition of the in-place U-turn is satisfied.

## Description

### CROSS-REFERENCE TO RELATED APPLICATIONS

This application claims priority to Chinese Patent Application No. 202311181719.5 filed with the China National Intellectual Property Administration on September 13, 2023 and entitled "IN-PLACE U-TURN CONTROL METHOD AND CONTROL APPARATUS, VEHICLE, AND STORAGE MEDIUM", which is incorporated herein by reference in its entirety.

### TECHNICAL FIELD

This application relates to the field of vehicle technologies, and in particular, to an in-place U-turn control method, an in-place U-turn control apparatus, a vehicle, and a computer-readable storage medium.

### BACKGROUND

In the related technologies, an in-place U-turn operation for a vehicle generally needs to be controlled by a driver through turning a steering wheel. However, there is a restriction in this process, that is, an in-place U-turn mode of the vehicle can be activated only when a steering angle of the steering wheel exceeds a specific threshold. This restriction may cause potential safety hazards for a novice driver. If the driver fails to turn the steering wheel to a sufficiently large angle, the vehicle may have problems that the vehicle stalls, deviates from a safe route during an in-place U-turn, or the like, and especially on busy roads or in heavy traffic, this may lead to unstable operation and pose safety risks.

### SUMMARY

This application is intended to solve at least one of technical problems in a conventional technology or the related technologies. To this end, one objective of this application is to provide an in-place U-turn control method. According to the method, a driver can control an in-place U-turn operation of a vehicle more flexibly, which reduces difficulty of the in-place U-turn operation, improves safety and operability of the in-place U-turn operation, and reduces potential safety risks.

A second objective of this application is to provide an in-place U-turn control apparatus.

A third objective of this application is to provide a vehicle.

A fourth objective of this application is to provide a computer-readable storage medium.

To achieve the foregoing objective, an in-place U-turn control method provided in an embodiment of a first aspect of this application includes: obtaining turning direction information of an in-place U-turn input by a user via a display apparatus; and controlling a vehicle to perform the in-place U-turn according to the turning direction information until a stop condition of the in-place U-turn is satisfied.

According to the in-place U-turn control method provided in this embodiment of this application, the turning direction information of the in-place U-turn is obtained, so that the vehicle is controlled to perform the in-place U-turn until the stop condition of the in-place U-turn is satisfied. This means that a driver can control the in-place U-turn operation of the vehicle more intuitively without relying on a specific steering wheel angle, the driver can control the in-place U-turn operation of the vehicle more flexibly, which reduces difficulty of the in-place U-turn operation, and improves operation flexibility of the driver and safety. In addition, the setting of the stop condition can ensure that the in-place U-turn can be terminated at an appropriate time to avoid excessive U-turn or continuous U-turn, thereby reducing potential safety risks.

In some embodiments, that the stop condition of the in-place U-turn is satisfied includes: any of the following conditions being satisfied: a pedal depth of a brake pedal of the vehicle is greater than a preset depth threshold; a request instruction for exiting an in-place steering mode input by the user via the display apparatus is received; a steering wheel angle value of the vehicle is greater than a preset steering angle threshold; and a turning angle of the vehicle reaches a target U-turn angle.

In some embodiments, before obtaining turning direction information of the in-place U-turn input by the user via the display apparatus, the in-place U-turn control method further includes: in response to an in-place U-turn start instruction, obtaining the steering wheel angle value; and when the steering wheel angle value is determined to be less than the preset steering angle threshold, providing an in-place U-turn function setting interface for the user to input the turning direction information.

In some embodiments, controlling the vehicle to perform the in-place U-turn according to the turning direction information includes: determining a first turning direction of wheels on one side of the vehicle and a second turning direction of wheels on the other side of the vehicle according to the turning direction information, wherein the first turning direction is opposite to the second turning direction.

In some embodiments, the in-place U-turn control method further includes: obtaining U-turn ground scenario information.

In some embodiments, controlling the vehicle to perform the in-place U-turn according to the turning direction information includes: according to the turning direction information and the U-turn ground scenario information, providing a first driving torque in a first direction to the wheel on one side of the vehicle, and providing a second driving torque in a second direction to the wheel on the other side of the vehicle, wherein the first direction and the second direction are opposite directions, and the first driving torque and the second driving torque are not equal.

In some embodiments, controlling the vehicle to perform the in-place U-turn according to the turning direction information further includes: when a left or right steering angle is generated at a front wheel of the vehicle and the steering angle is within a preset steering angle threshold, controlling a rear wheel of the vehicle to turn in an opposite direction relative to the front wheel on a corresponding side of the vehicle in accordance with a preset correspondence.

In some embodiments, after obtaining turning direction information of the in-place U-turn input by the user via the display apparatus, the in-place U-turn control method further includes: prompting the user to operate the brake pedal; detecting that a pedal depth of the brake pedal is greater than a preset depth threshold and a gear of the vehicle is switched from a P gear to a D gear; and prompting the user with in-place U-turn operation information.

In some embodiments, the in-place U-turn control method further includes: obtaining in-place U-turn mode setting information; determining a target in-place U-turn mode according to the in-place U-turn mode setting information, wherein the target in-place U-turn mode includes a driver control mode or an automatic control mode.

In some embodiments, obtaining turning direction information of the in-place U-turn input by the user via the display apparatus includes: in the driver control mode, obtaining at least a U-turn direction input by the user via the display apparatus; and in the automatic control model, obtaining at least a U-turn direction and a target U-turn angle which are input by the user via the display apparatus.

In some embodiments, in the driver control mode, the prompting the user with in-place U-turn operation information includes at least one of the following: releasing the brake pedal to trigger the in-place U-turn operation of the vehicle, and when the vehicle turns around, adjusting a turning speed in response to information of a throttle pedal; when the vehicle turns around, keeping a steering wheel in a centered position; and when the vehicle makes a U-turn, in response to the pedal depth of the brake pedal exceeding the preset depth threshold, the vehicle exits the driver control mode.

In some embodiments, in the driver control mode, the in-place U-turn control method further includes: when the vehicle turns around, controlling the vehicle to rotate at a preset yaw rate; in response to a throttle pedal instruction, controlling a yaw rate of the vehicle to vary with an opening of the throttle pedal; and after the throttle pedal is released, controlling the vehicle to continue rotating at the preset yaw rate.

In some embodiments, in the automatic control mode, the prompting the user with in-place U-turn operation information includes at least one of the following: releasing the brake pedal to trigger the in-place U-turn operation of the vehicle, and automatically stopping after the vehicle rotates to a specified target U-turn angle; when the vehicle turns around, keeping a steering wheel in a centered position; and when the vehicle makes a U-turn, in response to the pedal depth of the brake pedal exceeding the preset depth threshold the vehicle exits the automatic control mode.

To achieve the foregoing objective, an in-place U-turn control apparatus provided in an embodiment of a second aspect of this application includes: at least one processor; and a memory in communication connection with the at least one processor. At least one computer program capable of being executed by the at least processor is stored in the memory, and the at least one processor, when executing the computer program, is configured to implement the in-place U-turn control method in the foregoing embodiment.

According to the in-place U-turn control apparatus provided in this embodiment of this application, the processor executes the in-place U-turn control method in the foregoing embodiment and obtains turning direction information of an in-place U-turn, and then controls the vehicle to perform the in-place U-turn until a stop condition of the in-place U-turn is satisfied. This means that a driver can control the in-place U-turn operation of the vehicle more intuitively without relying on a specific steering wheel angle, the driver can control the in-place U-turn operation of the vehicle more flexibly, which reduces difficulty of the in-place U-turn operation, and improves operation flexibility of the driver and safety. In addition, the setting of the stop condition can ensure that the in-place U-turn can be terminated at an appropriate time to avoid excessive U-turn or continuous U-turn, thereby reducing potential safety risks.

To achieve the foregoing objective, a vehicle provided in an embodiment of a third aspect of this application includes the in-place U-turn control apparatus in the foregoing embodiment.

According to the vehicle in this embodiment of this application, the in-place U-turn control method in the foregoing embodiment is adopted, so that the driver can control an in-place U-turn operation of the vehicle more flexibly, which reduces difficulty of the in-place U-turn operation, improves safety and operability of the in-place U-turn operation, and reduces potential safety risks.

To achieve the foregoing objective, a computer-readable storage medium provided in an embodiment of a fourth aspect of this application stores a computer program, and the computer program, when executed, is configured to implement the in-place U-turn control method in the foregoing embodiment.

Additional aspects and advantages of this application are set forth in part in the following description, and part of which becomes apparent from the following description or from the practice of this application.

### BRIEF DESCRIPTION OF DRAWINGS

The foregoing and/or additional aspects and advantages of this application become apparent and readily understandable from descriptions of embodiments with reference to the following accompanying drawings.
FIG. 1 is a flowchart of an in-place U-turn control method according to an embodiment of this application;
FIG. 2 is a diagram of an in-place U-turn function setting interface according to an embodiment of this application;
FIG. 3 is a diagram of a principle of an in-place U-turn according to an embodiment of this application;
FIG. 4 is a diagram of an in-place U-turn of a vehicle with rear-wheel steering according to an embodiment of this application;
FIG. 5 is a timing diagram of a driver control mode according to an embodiment of this application;
FIG. 6 is a timing diagram of an automatic control mode according to an embodiment of this application;
FIG. 7 is an overall flowchart of an in-place U-turn control method according to an embodiment of this application;
FIG. 8 is a block diagram of an in-place U-turn control apparatus according to an embodiment of this application; and
FIG. 9 is a block diagram of a vehicle according to an embodiment of this application.

### Reference numerals:

1000: vehicle;
1: in-place U-turn control apparatus;
10: processor; 20: memory.

### DESCRIPTION OF EMBODIMENTS

Embodiments of this application are described in detail below, and embodiments described with reference to accompanying drawings are exemplary.

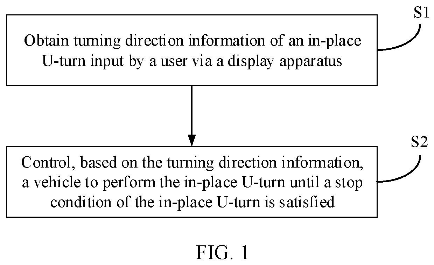

The following describes an in-place U-turn control method according to an embodiment of this application with reference to FIG. 1 to FIG. 7.

FIG. 1 is a flowchart of an in-place U-turn control method according to an embodiment of this application. As shown in FIG. 1, the in-place U-turn control method includes at least steps S1 and S2, which are specifically as follows.

S1. Obtain turning direction information of an in-place U-turn input by a user via a display apparatus.

The turning direction information of the in-place U-turn may be key information for the user or a system to configure an in-place U-turn operation. Such information may include, but is not limited to: a U-turn direction, a U-turn angle, and other information.

In some embodiments, the turning direction information of the in-place U-turn may be obtained in a plurality of ways, such as, the display apparatus, voice recognition, and a sensor (such as a camera, a radar, and a laser sensor). Specifically, the user may input the turning direction information of the in-place U-turn by using a display apparatus on a vehicle, such as a touchscreen PAD (Personal Access Device, personal access device) or an instrument display. The user may select options such as a control mode, a direction, and an angle on a screen. Alternatively, the user may send a configuration instruction of the turning direction information of the in-place U-turn by voice. In addition, the system may also be equipped with a sensor to collect a current position and ambient environment information of a vehicle to automatically determine turning direction information of an in-place U-turn, such as a U-turn direction and a U-turn angle, thereby adapting to driving conditions better.

S2. Control a vehicle to perform the in-place U-turn according to the turning direction information until a stop condition of the in-place U-turn is satisfied.

In some embodiments, controlling the vehicle to perform the in-place U-turn according to the turning direction information may be implemented by controlling wheels on both sides of the vehicle to perform a differential operation. Specifically, controlling power output of the wheels on both sides can enable wheels on one side to rotate faster and wheels on the other side rotate slower. This typically involves an operation of a differential, which may distribute power to each wheel to achieve a desired differential operation, thereby implementing the in-place U-turn operation. In the process of executing the in-place U-turn operation, the system may continuously monitor a vehicle status and environmental conditions, and dynamically adjust differential operational parameters according to real-time data. For example, the system can adjust differential operational parameters to ensure safety and stability of the vehicle when the vehicle encounters obstacles or different ground slopes.

According to the in-place U-turn control method provided in this embodiment of this application, the turning direction information of the in-place U-turn is obtained, so that the vehicle is controlled to perform the in-place U-turn until the stop condition of the in-place U-turn is satisfied. This means that a driver can control the in-place U-turn operation of the vehicle more intuitively without relying on a specific steering wheel angle, the driver can control the in-place U-turn operation of the vehicle more flexibly, which reduces difficulty of the in-place U-turn operation, and improves operation flexibility of the driver and safety. In addition, the setting of the stop condition can ensure that the in-place U-turn can be terminated at an appropriate time to avoid excessive U-turn or continuous U-turn, thereby reducing potential safety risks.

In some embodiments, satisfaction of a stop condition for the in-place U-turn includes that any of the following conditions is satisfied.

First, a pedal depth of a brake pedal of the vehicle is greater than a preset depth threshold. This means that if a driver depresses the brake pedal during a U-turn operation and the depth has reached the preset depth threshold, the in-place U-turn may stop. This is a common mode of operation where the driver may usually depress the brake pedal to slow down or stop. Therefore, when intending to terminate the in-place U-turn operation, the driver only needs to depress the brake pedal to a specific depth, and the vehicle may make a response and stop U-turn.

Second, a request instruction for exiting an in-place steering mode input by the user via the display apparatus is received. This condition allows the driver to input the request instruction via the display apparatus to exit the in-place steering mode. This is a particularly intuitive way that allows the driver to actively terminate the in-place U-turn operation as needed. For example, if the driver suddenly finds that it is inappropriate or there is an obstacle during the in-place U-turn, the driver may send an exit instruction via the display apparatus.

Third, a steering wheel angle value of the vehicle is greater than a preset steering angle threshold. This means that if the driver quickly turns the steering wheel during a U-turn operation and the steering wheel angle value is greater than the preset steering angle threshold, the vehicle may stop the U-turn. This is also a safety mechanism to cope with a sudden operation by the driver.

Fourth, a turning angle of the vehicle reaches a target U-turn angle. This means that the in-place U-turn operation may stop when the turning angle of the vehicle reaches a preset target U-turn angle. This condition may ensure that the vehicle completes an expected U-turn action, and the system may stop the U-turn operation once the target U-turn angle is reached.

Therefore, the presence of these stop conditions makes the in-place U-turn operation more intelligent and flexible, the U-turn operation can be stopped according to different driving scenarios and requirements, so that controllability and safety of the in-place U-turn operation are improved. This multi-condition stopping condition design may adapt to different driving situations, thereby enhancing practicality.

In some embodiments, in the related technologies, the vehicle is controlled by rotating a steering wheel to perform an in-place U-turn, and the in-place U-turn mode can be activated only when the steering wheel is turned beyond a specific threshold. This may cause wheels of the vehicle to deviate from a horizontal orientation relative to a vehicle body during the U-turn operation, leading to degraded handling and stability of the vehicle during the in-place U-turn. Therefore, before the turning direction information of the in-place U-turn input by the user via the display apparatus is obtained, in response to an in-place U-turn start instruction, it is necessary to obtain the steering wheel angle value, determine that the steering wheel angle value is less than a preset steering angle threshold, and provide an in-place U-turn function setting interface for the user to input in-place U-turn setting information.

Specifically, when the system receives the in-place U-turn start instruction, the system may detect a current steering wheel angle value. The in-place U-turn start instruction may be a manual input from the driver, such as pressing a specific button or issuing a voice command, or may be a situation where the system automatically detects that the in-place U-turn operation is required. The steering angle value is used for determining whether the driver has started turning the steering wheel to perform the U-turn operation.

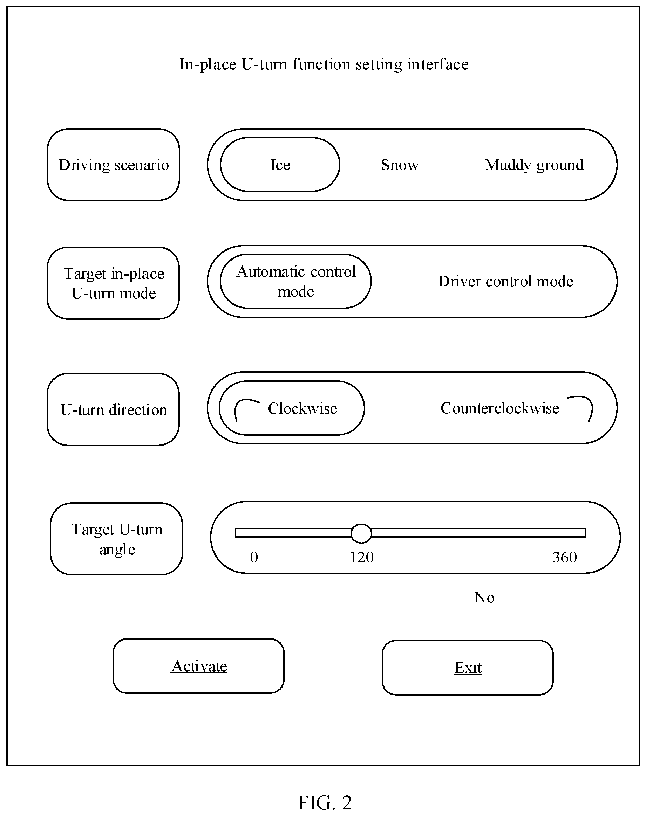

Further, the current steering wheel angle value is compared with the preset steering angle threshold. The preset steering angle threshold is a preset threshold that represents a maximum allowable turning angle of front wheels of the vehicle. If the steering wheel angle value is less than the preset steering angle threshold, the system may provide the in-place U-turn function setting interface (shown in FIG. 2) for the user to input the in-place U-turn setting information. On this interface, the user may select parameters such as a driving scenario, a control mode, a U-turn direction, and a U-turn angle to personalize configuration of the in-place U-turn operation.

In some embodiments, controlling the vehicle to perform the in-place U-turn according to the turning direction information includes: determining a first turning direction of wheels on one side of the vehicle and a second turning direction of wheels on the other side of the vehicle according to the turning direction information, where the first turning direction is opposite to the second turning direction. This is because during the in-place U-turn operation, the vehicle needs to rotate around its own axis rather than moving straight in one direction. If the first turning direction is the same as the second turning direction, the vehicle may move forward or backward only in one direction rather than generating turning. Therefore, to achieve the in-place U-turn operation, it is necessary to ensure that the first turning direction is opposite to the second turning direction.

In some embodiments, the in-place U-turn control method further includes: obtaining U-turn ground scenario information. The U-turn ground scenario information may include information such as a pavement condition, a pavement type, a ground slope, and an obstacle.

The pavement condition may include a state of a current pavement, such as dry, wet, muddy, or snow-covered. Different pavement conditions may require different in-place U-turn operation strategies to ensure stability of the vehicle. The pavement type may include a material of the current pavement, such as an asphalt road, a cement road, a gravel road, and a grass road. Different pavement types may have different effects on traction and controllability of the vehicle. The ground slope may include an uphill, a downhill, a flatness, or the like, and steepness or inclination of the ground slope may affect in-place U-turn performance of the vehicle. If the ground is inclined, the system may need to adjust differential operation of the wheels to maintain balance. The obstacle may include fixed obstacles, such as roadblocks, curbs, guardrails, traffic sign poles, utility poles, and buildings. These objects are generally stationary but may affect the U-turn operation. Moving obstacles may include objects capable of moving on a U-turn path, such as vehicles, pedestrians, bicycles, and motorcycles. These moving obstacles require special attention to ensure safety of the in-place U-turn operation.

In some embodiments, controlling the vehicle to perform the in-place U-turn according to the turning direction information includes: according to the turning direction information and the U-turn ground scenario information, providing a first driving torque in a first direction to wheels on one side of the vehicle, and providing a second driving torque in a second direction to wheels on the other side of the vehicle. The first direction and the second direction are opposite directions. In addition, the first driving torque and the second driving torque are not equal. This is because when the first driving torque and the second driving torque are not equal, the wheels on one side of the vehicle may undergo a greater driving force while the wheels on the other side may undergo a smaller driving force. This unbalance of driving forces leads to a differentiated wheel motion of the vehicle, making the wheels on one side rotate faster and the wheels on the other side rotate slower. The vehicle may start to rotate about its central point, which is the key to achieve in-place U-turn or rotation. This is because such unbalanced wheel motion causes the vehicle to rotate along a circular or arc path instead of traveling in a straight line.

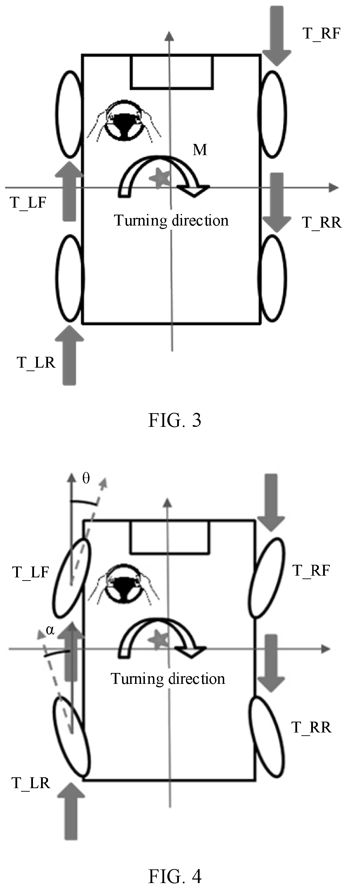

FIG. 3 is a schematic diagram of an in-place U-turn according to an embodiment of this application. As shown in FIG. 3, clockwise in-place U-turn of the vehicle is taken as an example, a positive driving torque is provided to left wheels serving as outer wheels, where an outer left front wheel is T_LF, and an outer left rear wheel is T_LR. A negative torque is provided to right wheels serving as inner wheels, where an inner right front wheel is T_RF, and an inner right rear wheel is T_RR. A reverse driving torque is provided to the inner wheels while the positive driving torque is provided to the outer wheels, so that a differential torque between the inner and outer sides may generate a yaw moment at a center of mass of the vehicle, and when the yaw moment is large enough, the vehicle can break through road adhesion and start rotating, thereby achieving an in-place U-turn function.

In some embodiments, controlling the vehicle to perform the in-place U-turn according to the turning direction information further includes: when a left or right steering angle is generated at a front wheel of the vehicle and the steering angle is within a preset steering angle threshold, controlling a rear wheel of the vehicle to turn in an opposite direction relative to the front wheel on a corresponding side in accordance with a preset correspondence. This is equivalent to applying steering forces in different directions to a front portion and a rear portion of the vehicle. The purpose of this control is to help maintain vehicle balance, and in particular, a motion between the front portion and the rear portion of the vehicle needs to be coordinated during the in-place U-turn. Turning of the vehicle can be better implemented by making the rear wheel follow the movement of the front wheel, so that the vehicle can rotate around its own center point without losing balance, thereby enhancing a control of the driver over the vehicle, and improving handling and stability of driving.

FIG. 4 is a diagram of an in-place U-turn of a vehicle with rear-wheel steering according to an embodiment of this application. As shown in FIG. 4, the rear-wheel steering means that a rear wheel may vary in accordance with a steering angle of a front wheel when a specific steering angle is generated at the front wheel and the steering angle is within a preset steering angle threshold, thereby maintaining the vehicle in a balanced state. Specifically, when a steering angle θ is generated at the front wheel, a following steering angle α in an opposite direction relative to the front wheel is generated at the rear wheel in accordance with the preset correspondence. A relationship between the front wheel and the rear wheel may be a proportional relationship, an exponential relationship, or a correspondence, which makes the vehicle maintained in a balanced state and rotate about the center of mass.

In some embodiments, after obtaining the turning direction information of the in-place U-turn input by the user via the display apparatus, the system can prompt the user to operate the brake pedal. This means that the user is required to depress the brake pedal prior to the in-place U-turn operation to ensure that the vehicle can be controlled by slowing down during the in-place U-turn.

Further, the system may monitor a depth of the brake pedal, that is, a degree to which the user depresses the brake pedal. When the pedal depth of the brake pedal exceeds a preset depth threshold, the system can switch a gear of the vehicle from a P gear to a D gear in preparation for the in-place U-turn operation.

Further, once the system detects that the brake pedal operation and gear switching are ready, the system may provide operational information of the in-place U-turn to the user. This may include informing the user that the brake pedal can be released to trigger the in-place U-turn, and providing relevant information on how to control the steering wheel, handle a throttle to control the steering speed, and the like.

In some embodiments, the in-place U-turn control method further includes: obtaining in-place U-turn mode setting information; determining a target in-place U-turn mode according to the in-place U-turn mode setting information, where the target in-place U-turn mode includes a driver control mode or an automatic control mode.

Specifically, the system may determine the target in-place U-turn mode according to the in-place U-turn mode setting information input by the user. If the in-place U-turn mode setting information indicates that the driver has chosen to manually control the in-place U-turn operation, the system determines the driver control mode as the target in-place U-turn mode. If the in-place U-turn mode setting information indicates that the driver has chosen to cause the vehicle to execute the in-place U-turn automatically, the system determines the automatic control mode as the target in-place U-turn mode.

In some embodiments, for the driver control mode, the driver has direct control authority, and may independently determine a speed, direction, and angle of U-turn by manually handling the steering wheel, the brake pedal, and a throttle pedal. This mode is applicable to situations where the driver intends to execute the U-turn operation personally, has confidence in a U-turn condition, and assumes operational responsibility. This mode is generally used for normal road driving and low-risk U-turn situations.

For the automatic control mode, the in-place U-turn operation of the vehicle is automatically controlled by the system, and is executed according to the U-turn direction and the target U-turn angle in the turning direction information of the in-place U-turn, without requiring direct handling by the driver. This mode is applicable to a situation in which the driver intends for the vehicle to execute the U-turn operation automatically, for example, the driver is uncertain or unfamiliar with the U-turn conditions, or a road condition is complex, and an advanced driver assistance system is required to ensure safety.

In some embodiments, in the driver control mode, after the U-turn direction is selected, the PAD prompts the user to depress the brake pedal and switch the gear to a D gear, and the brake pedal is kept in a depressed state in this process. After the user switches the gear to the D gear, an instrument prompts the user with the in-place U-turn operation information, including at least one of the following.

First: release the brake pedal to trigger an in-place U-turn operation of the vehicle, and when the vehicle turns around, adjust a turning speed in response to information of a throttle pedal. This allows the user to increase or decrease the turning speed as needed during the U-turn for more precise handling.

Second: when the vehicle turns around, keep the steering wheel in a centered position. An excessive steering wheel angle value may result in function exiting, so the user is required to keep the steering wheel back to a normal driving condition to ensure that the vehicle is stable during the U-turn operation.

Third: when the vehicle turns around, in response to the pedal depth of the brake pedal exceeding the preset depth threshold, the vehicle exits the driver control mode. This is for the safety of the user, if the depth of the brake pedal exceeds the preset depth threshold, it indicates that the user may intend to stop the in-place U-turn operation and the system can exit the driver control mode or automatically switch to another mode accordingly.

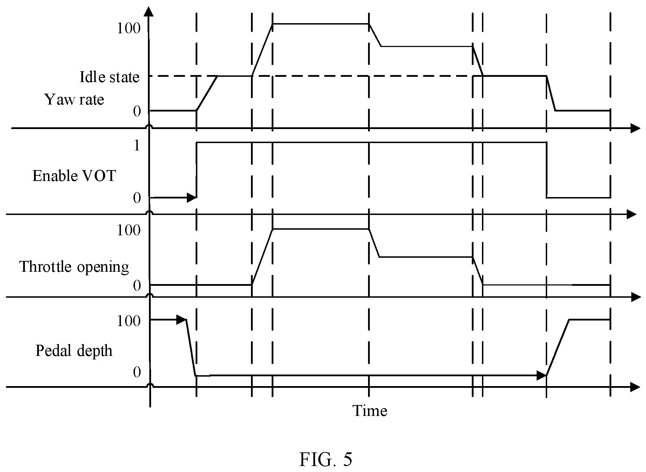

FIG. 5 is a timing diagram of a driver control mode according to an embodiment of this application. As shown in FIG. 5, the in-place U-turn control method further includes that: when the driver releases the brake pedal and the pedal depth of the brake pedal is within the preset depth threshold, VOT (Visual Object Tracking, visual object tracking) is enabled to make the vehicle enter the driver control mode. In this case, when the vehicle turns around, the vehicle is controlled to continue rotating at a preset yaw rate, where the preset yaw rate may be a yaw rate in a relatively low idle speed. The yaw rate may be implemented by adjusting or setting parameters and is generally set to a relatively low value. This means that the vehicle performs the U-turn operation at a lower turning speed, but this speed can be adjusted as needed to meet specific driving conditions or user preferences. With a quantifiable setting, the U-turn operation of the vehicle can be customized according to specific conditions to provide better handling and stability.

Further, in response to a throttle pedal instruction, the yaw rate of the vehicle is controlled to vary with an opening of the throttle pedal. For example, when the user depresses the throttle pedal and the opening of the throttle becomes larger and larger, the yaw rate may increase accordingly to speed up the U-turn operation.

Further, after the throttle pedal is released, the vehicle is controlled to continue rotating at the preset yaw rate, for example, a yaw rate in an idle state. This means that even if the user releases the throttle pedal during the U-turn operation, the vehicle can continue rotating at the yaw rate in an idle state, which helps maintain stability of the U-turn and ensures that the vehicle is kept at a controllable state during the U-turn operation.

Further, when the driver depresses the brake pedal, if the pedal depth of the brake pedal exceeds the preset depth threshold, the VOT state is set to 0, and the in-place U-turn function in the driver control mode is deactivated.

In some embodiments, in the automatic control mode, after the U-turn direction and the target U-turn angle are selected, the instrument prompts the user to depress the brake pedal and switch a gear to a D gear, and the brake pedal is kept in a depressed state in this process. After the user switches the gear to the D gear, an instrument prompts the user with the in-place U-turn operation information, including at least one of the following.

First: release the brake pedal to trigger an in-place U-turn operation of the vehicle, and automatically stop the vehicle after the vehicle rotates to a specified target U-turn angle. In this way, the driver does not need to manually stop the vehicle, and convenience of operation is increased.

Second: when the vehicle turns around, keep the steering wheel in a centered position. This means that, in the automatic control mode, the steering wheel can be kept at a centered position without driver intervention. This may ensure that the vehicle is stable during the U-turn operation, and an operating burden of a driver is reduced.

Third: when the vehicle turns around, in response to the pedal depth of the brake pedal exceeding the preset depth threshold, the vehicle exits the automatic control mode. This is to increase security and control authority of the user. If the user suddenly depresses the brake pedal in the automatic control mode, the vehicle may exit the automatic mode to allow the driver to intervene at any time and stop the U-turn operation.

Therefore, the operation information makes execution of the in-place U-turn operation in the automatic control mode safer and more controllable, and provides the user with a certain degree of flexibility to manually intervene or stop the operation when necessary. This helps improve handling and stability of the vehicle.

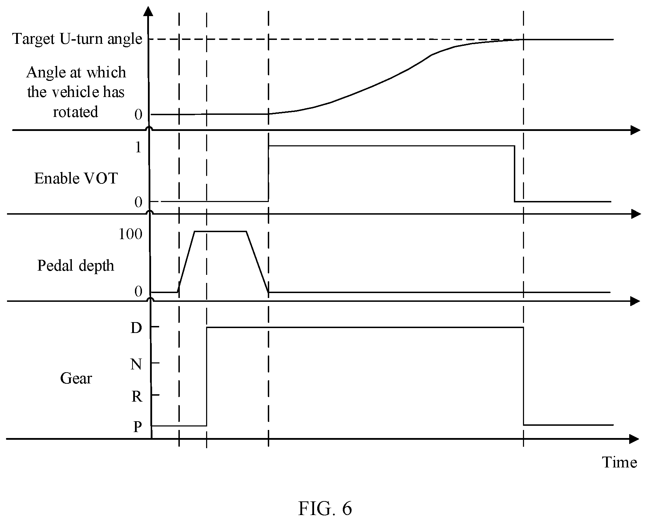

FIG. 6 is a timing diagram of an automatic control mode according to an embodiment of this application. As shown in FIG. 6, the in-place U-turn control method further includes that: when the driver releases the brake pedal and the pedal depth of the brake pedal is within the preset depth threshold, VOT is enabled to make the vehicle enter the automatic control mode. At this time, in the automatic control mode, the vehicle starts to rotate, and turning of the vehicle is automatically controlled according to the preset target U-turn angle, which means that the vehicle can rotate to the preset target U-turn angle. Once the vehicle has reached the preset target U-turn angle, the automatic control mode can control the vehicle to stop. Then, the vehicle automatically switches the gear from a D gear to a P gear to complete the in-place U-turn operation.

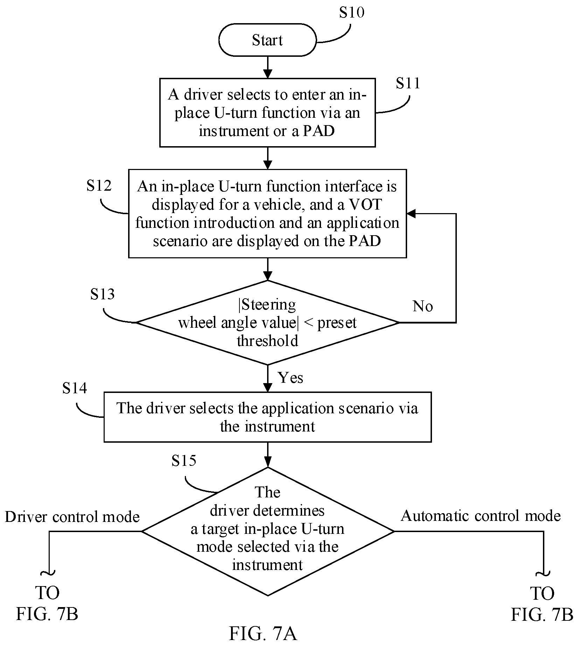

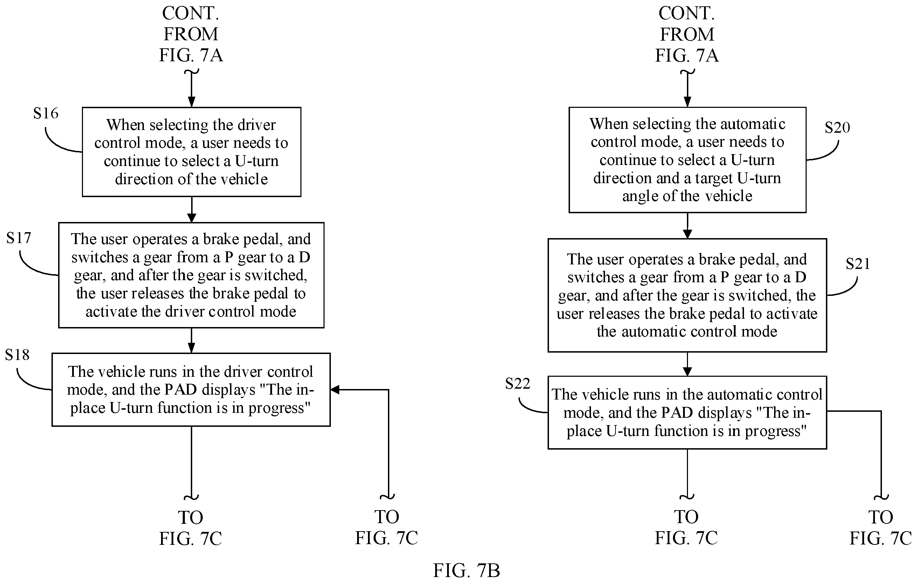

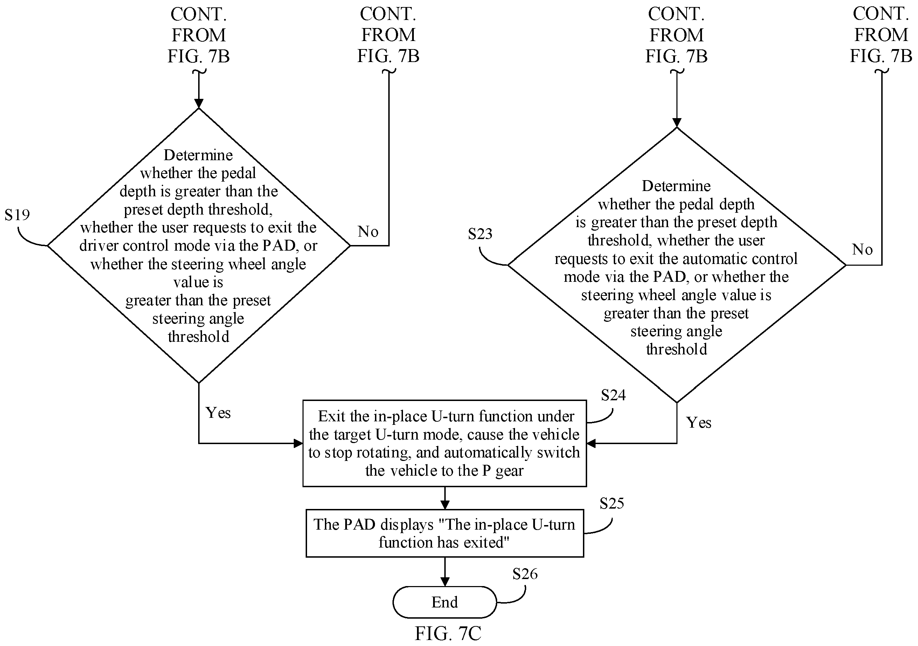

FIG. 7 is an overall flowchart of an in-place U-turn control method according to an embodiment of this application. As shown in FIG. 7, the overall procedure of the in-place U-turn control method includes at least steps S10 to S26, which are specifically as follows.

S10: start.

S11: a driver selects to enter an in-place U-turn function via an instrument or a PAD.

S12: an in-place U-turn function interface is displayed for a vehicle, and a VOT function introduction and an application scenario are displayed on the PAD.

S13: determine whether a steering wheel angle value is less than a preset steering angle threshold; if the steering wheel angle value is less than the preset steering angle threshold, proceed to step S14; and if the steering wheel angle value is not less than the preset steering angle threshold, return to step S12.

Specifically, when the driver taps to enter a VOT function, the system determines whether a steering angle of a wheel is within the preset steering angle threshold. When the steering wheel angle value of the vehicle exceeds the preset steering angle value, the VOT function cannot be activated, and a prompt "Please operate after the steering wheel is returned to a center position" is displayed on the PAD to prompt a user. When the steering wheel angle value is within the preset steering angle threshold, a VOT function interface is displayed for the user.

S14: the driver selects the application scenario via the instrument, and the application scenario may include, but is not limited to, ice, snow, sand, and the like.

S15: the driver determines a target in-place U-turn mode selected via the instrument.

S16: when selecting a driver control mode, the user needs to continue to select a U-turn direction of the vehicle.

S17: the user operates a brake pedal, and switches a gear from a P gear to a D gear, and after the gear is switched, the user releases the brake pedal to activate the driver control mode.

S18: the vehicle runs in the driver control mode, and the PAD displays "The in-place U-turn function is in progress".

S19: determine whether a pedal depth of the brake pedal is greater than a preset depth threshold, whether the user requests to exit the driver control mode via the PAD, or whether the steering wheel angle value is greater than the preset steering angle threshold; if any one of the conditions is met, proceed to step S24; and otherwise, return to step S18.

S20: when selecting an automatic control mode, the user needs to continue to select a U-turn direction and a target U-turn angle of the vehicle. The U-turn direction includes a left turn and a right turn. The target U-turn angle ranges from 90° to 360°.

S21: the user operates a brake pedal, and switches a gear from a P gear to a D gear, and after the gear is switched, the user releases the brake pedal to activate the automatic control mode.

S22: the vehicle runs in the automatic control mode, and the PAD displays "The In-place U-turn function is in progress".

S23: determine whether the pedal depth of the brake pedal is greater than the preset depth threshold, whether the user requests to exit the automatic control mode via the PAD, or whether the steering wheel angle value is greater than the preset steering angle threshold; if any one of the conditions is met, proceed to step S24; and otherwise, return to step S22.

S24: the in-place U-turn function exits in the target in-place U-turn mode, the vehicle stops turning, and the vehicle is automatically switched to the P gear.

S25: the PAD displays "The in-place U-turn function has exited".

S26: end.

To sum up, this application provides two options for the in-place U-turn mode: the driver control mode and the automatic control mode. The driver may select different target in-place U-turn mode during in-place U-turn, and control the vehicle to perform the in-place U-turn according to turning direction information and U-turn ground scenario information, thereby implementing a flexible in-place U-turning operation. In addition, this application further provides a variety of safety mechanisms to ensure exiting the target in-place U-turn mode when needed, including a brake pedal operation, a user request instruction, and a steering wheel operation, thereby improving safety and handling of the vehicle.

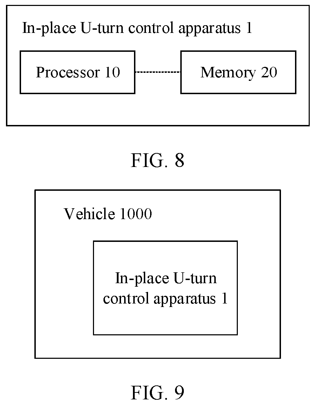

Based on the in-place U-turn control method in the foregoing embodiment, the following describes an in-place U-turn control apparatus 1 provided in an embodiment of this application with reference to FIG. 8.

FIG. 8 is a block diagram of an in-place U-turn control apparatus 1 according to an embodiment of this application. As shown in FIG. 8, the in-place U-turn control apparatus 1 includes: at least one processor 10 and a memory 20.

The memory 20 is in communication connection with the at least one processor 10, and is configured to store a computer program and related data. The memory 20 may include a random-access memory (RAM), a read-only memory (ROM), a flash memory, or the like.

The processor 10, when configured to execute an instruction in the computer program, may implement the in-place U-turn control method in the foregoing embodiment. The processor 10 may be a central processing unit (CPU) or another compute device.

According to the in-place U-turn control apparatus 1 provided in this embodiment of this application, the processor 10 executes the in-place U-turn control method in the foregoing embodiment and obtains turning direction information of the in-place U-turn, and then controls the vehicle to perform the in-place U-turn until a stop condition of the in-place U-turn is satisfied. This means that the driver can control the in-place U-turn operation of the vehicle more intuitively without relying on a specific steering wheel angle, so that the driver can control the in-place U-turn operation of the vehicle more flexibly, which reduces difficulty of the in-place U-turn operation, and improves operation flexibility and safety of the driver. In addition, the setting of the stop condition can ensure that the in-place U-turn can be terminated at an appropriate time to avoid excessive U-turn or continuous U-turn, thereby reducing potential safety risks.

In some embodiments of this application, a vehicle 1000 is further provided. As shown in FIG. 9, the vehicle 1000 includes the in-place U-turn control apparatus 1 in the foregoing embodiment.

In some embodiments, the vehicle 1000 may include a steering system, a drive system, a braking system, and the like. The steering system may be configured to control steering of front wheels according to turning direction information of in-place U-turn input by a driver via a display apparatus. The drive system may be configured to control the front wheels and rear wheels according to the turning direction information, U-turn ground scenario information, and a driving torque. This system ensures that the vehicle can maintain balance and stability during the in-place U-turn. The braking system may ensure that the U-turn operation can be stopped quickly if needed by means of the brake pedal or other ways.

According to the vehicle 1000 in this embodiment of this application, the in-place U-turn control method in the foregoing embodiment is adopted, so that the driver can control the in-place U-turn operation of the vehicle more flexibly, which reduces difficulty of the in-place U-turn operation, improves safety and operability of the in-place U-turn operation, and reduces potential safety risks.

In some embodiments of this application, a computer-readable storage medium is further provided. A computer program is stored on the computer-readable storage medium, and the computer program, when executed, can implement the in-place U-turn control method in any one of the foregoing embodiments.

According to the computer-readable storage medium provided in this embodiment of this application, the computer program is stored on the computer-readable storage medium. The computer program, when executed by a processor 10, can implement the in-place U-turn control method in the foregoing embodiment. Turning direction information of the in-place U-turn is obtained to control the vehicle to perform the in-place U-turn until a stop condition of the in-place U-turn is satisfied. This means that the driver can control the in-place U-turn operation of the vehicle more intuitively without relying on a specific steering wheel angle, so that the driver can control the in-place U-turn operation of the vehicle more flexibly, which reduces difficulty of the in-place U-turn operation, improves operation flexibility and safety of the driver, and reduces potential safety risks.

The computer-readable storage medium according to the embodiment of this application may include, but is not limited to, a phase change memory (PRAM), a static random-access memory (SRAM), a dynamic random-access memory (DRAM), another type of random-access memory (RAM), a read-only memory (ROM), an electrically erasable programmable read-only memory (EEPROM), a flash memory, or other optical or magnetic storage media, and details are not described herein.

In the descriptions of this specification, descriptions referring to the terms "one embodiment", "some embodiments", "example embodiments", "examples", "specific example" or "some examples" mean that specific features, structures, materials, or characteristics described with reference to this embodiment or example are included in at least one embodiment or example of this application. In this specification, the illustrative expression of the foregoing terms does not necessarily refer to the same embodiment or example.

Although embodiments of this application have been shown and described, those of ordinary skill in the art may understand that many changes, modifications, substitutions, and variations can be made to these embodiments without departing from the principles and purposes of this application, and the scope of this application is defined by the claims and their equivalents.

## Claims

1. An in-place U-turn control method, comprising:
obtaining turning direction information of an in-place U-turn input by a user via a display apparatus; and
controlling a vehicle to perform the in-place U-turn according to the turning direction information until a stop condition of the in-place U-turn is satisfied.

2. The in-place U-turn control method according to claim 1, wherein that the stop condition of the in-place U-turn is satisfied comprises:
any one of following conditions is satisfied:
a pedal depth of a brake pedal of the vehicle is greater than a preset depth threshold;
a request instruction for exiting an in-place steering mode input by the user via the display apparatus is received;
a steering wheel angle value of the vehicle is greater than a preset steering angle threshold; and
a turning angle of the vehicle reaches a target U-turn angle.

3. The in-place U-turn control method according to claim 2, wherein before obtaining turning direction information of the in-place U-turn input by the user via the display apparatus, the in-place U-turn control method further comprises:
in response to an in-place U-turn start instruction, obtaining the steering wheel angle value; and
when the steering wheel angle value is determined to be less than the preset steering angle threshold, providing an in-place U-turn function setting interface for the user to input the turning direction information.

4. The in-place U-turn control method according to any one of claims 1 to 3, wherein controlling the vehicle to perform the in-place U-turn according to the turning direction information comprises:
determining a first turning direction of wheels on one side of the vehicle and a second turning direction of wheels on the other side of the vehicle according to the turning direction information, wherein the first turning direction is opposite to the second turning direction.

5. The in-place U-turn control method according to any one of claims 1 to 4, wherein the in-place U-turn control method further comprises: obtaining U-turn ground scenario information.

6. The in-place U-turn control method according to claim 5, wherein controlling the vehicle to perform the in-place U-turn according to the turning direction information comprises:
according to the turning direction information and the U-turn ground scenario information, providing a first driving torque in a first direction to the wheels on one side of the vehicle, and providing a second driving torque in a second direction to the wheels on the other side of the vehicle, wherein the first direction and the second direction are opposite directions, and the first driving torque and the second driving torque are not equal.

7. The in-place U-turn control method according to claim 4 or 6, wherein controlling the vehicle to perform the in-place U-turn according to the turning direction information further comprises:
when a left or right steering angle is generated at a front wheel of the vehicle and the steering angle is within a preset steering angle threshold, controlling a rear wheel of the vehicle to turn in an opposite direction relative to the front wheel on a corresponding side of the vehicle in accordance with a preset correspondence.

8. The in-place U-turn control method according to any one of claims 1 to 7, wherein after obtaining turning direction information of the in-place U-turn input by the user via the display apparatus, the in-place U-turn control method further comprises:
prompting the user to operate a brake pedal;
detecting that a pedal depth of the brake pedal is greater than a preset depth threshold and a gear of the vehicle is switched from a P gear to a D gear; and
prompting the user with in-place U-turn operation information.

9. The in-place U-turn control method according to claim 8, wherein the in-place U-turn control method further comprises:
obtaining in-place U-turn mode setting information; and
determining a target in-place U-turn mode according to the in-place U-turn mode setting information, wherein the target in-place U-turn mode comprises a driver control mode or an automatic control mode.

10. The in-place U-turn control method according to claim 9, wherein obtaining turning direction information of the in-place U-turn input by the user via the display apparatus comprises:
in the driver control mode, obtaining at least a U-turn direction input by the user via the display apparatus; and
in the automatic control mode, obtaining at least a U-turn direction and a target U-turn angle input by the user via the display apparatus.

11. The in-place U-turn control method according to claim 9 or 10, wherein in the driver control mode, the prompting the user with in-place U-turn operation information comprises at least one of the following:
releasing the brake pedal to trigger an in-place U-turn operation of the vehicle, and when the vehicle turns around, adjusting a turning speed in response to information of a throttle pedal;
when the vehicle turns around, keeping a steering wheel in a centered position; and
when the vehicle makes a U-turn, in response to the pedal depth of the brake pedal exceeding the preset depth threshold, the vehicle exits the driver control mode.

12. The in-place U-turn control method according to any one of claims 9 to 11, wherein in the driver control mode, the in-place U-turn control method further comprises:
when the vehicle turns around, controlling the vehicle to rotate at a preset yaw rate;
in response to a throttle pedal instruction, controlling the yaw rate of the vehicle to vary with an opening of the throttle pedal; and
after the throttle pedal is released, controlling the vehicle to continue rotating at the preset yaw rate.

13. The in-place U-turn control method according to claim 9 or 10, wherein in the automatic control mode, the prompting the user with in-place U-turn operation information comprises at least one of the following:
releasing the brake pedal to trigger an in-place U-turn operation of the vehicle, and automatically stopping the vehicle after the vehicle rotates to a specified target U-turn angle;
when the vehicle turns around, keeping a steering wheel in a centered position; and
when the vehicle makes a U-turn, in response to the pedal depth of the brake pedal exceeding the preset depth threshold, the vehicle exits the automatic control mode.

14. An in-place U-turn control apparatus (1), comprising:
at least one processor (10); and
a memory (20) in communication connection with the at least one processor (10), wherein
at least one computer program capable of being executed by the at least processor (10) is stored in the memory (20), and when the at least one processor (10) executes the computer program, the in-place U-turn control method according to any one of claims 1 to 13 is implemented.

15. A vehicle (1000), comprising the in-place U-turn control apparatus (1) according to claim 14.

16. A computer-readable storage medium, storing a computer program, wherein when the computer program is executed, the in-place U-turn control method according to any one of claims 1 to 13 is implemented.
